# EUROPÄISCHE PATENTSCHRIFT

(11) **EP 3 697 992 B1**
(45) Veröffentlichungstag und Bekanntmachung des Hinweises auf die Patenterteilung: **30.03.2022**
(21) Anmeldenummer: 18795930.9
(22) Anmeldetag: 18.10.2018
(51) Int. Cl.: E05B 81/72, E05B 77/48, E05B 77/26, E05B 81/06, E05B 81/14, E05B 81/42, E05B 81/26

(54) **KRAFTFAHRZEUG MIT TÜRSCHLÖSSERN UND STEUEREINHEIT**
MOTOR VEHICLE WITH DOOR LOCKS AND CONTROL UNIT
VÉHICULE À MOTEUR ÉQUIPÉ DE SERRURES DE PORTE ET UNITÉ DE COMMANDE

(30) Priorität: 20.10.2017 DE 102017124527
(43) Veröffentlichungstag der Anmeldung: 26.08.2020
(73) Patentinhaber: Kiekert AG, 42579 Heiligenhaus (DE)
(72) Erfinder: SCHIFFER, Holger, 40668 Meerbusch (DE)
(86) Internationale Anmeldenummer: PCT/DE2018/100858
(87) Internationale Veröffentlichungsnummer: WO 2019/076410

(56) Entgegenhaltungen:
- WO-A1-2016/192707
- WO-A1-2017/098563
- DE-A1- 19 530 720
- DE-A1- 19 803 030
- DE-A1-102014 217 690
- DE-U1-202011 005 608
- DE-U1-202016 100 239
- GB-A- 2 331 119
- US-B2- 8 237 544

## Beschreibung

Die Erfindung betrifft ein Kraftfahrzeug, mit einer Mehrzahl an Kraftfahrzeugtürschlössern sowie wenigstens einer Steuereinheit, wobei das jeweilige Kraftfahrzeugtürschloss zumindest eine auf ein Gesperre mechanisch arbeitende Betätigungshebelkette aufweist, deren jeweiliger Status (wirksam/unwirksam) mit Hilfe eines Sensors erfasst und an die Steuereinheit übermittelt wird, und wobei die Steuereinheit je nach dem türschlossspezifischen Status der Betätigungshebelkette zwischen einzelnen Funktionsstellungen unterscheidet.

Moderne Kraftfahrzeuge sind oftmals mit vier Kraftfahrzeugtürschlössern an zugehörigen Seitentüren ausgerüstet. So verfügen die beiden vorderen und die beiden hinteren Seitentüren über jeweils ein Kraftfahrzeugtürschloss. Daneben sind regelmäßig weitere Kraftfahrzeugtürschlösser realisiert, beispielsweise ein Kraftfahrzeugtürschloss an oder in einer Fronthaube sowie ein weiteres Kraftfahrzeugtürschloss, welches einer Heckklappe zugeordnet ist. Selbstverständlich können auch weitere Kraftfahrzeugtürschlösser realisiert sein, die zur Verriegelung von Abdeckungen wie einer Motorabdeckung einer Tankklappe etc. dienen.

Während Haubenschlösser oder Klappenschlösser allgemein lediglich den Zustand "verriegelt" oder "entriegelt" bzw. geöffnet kennen, wird mit Bezug zu den Seitentüren zwischen weitergehenden Funktionsstellungen unterschieden. Hierzu gehört beispielsweise die Position "diebstahlgesichert", in welcher die fragliche Seitentür weder von außen noch von innen geöffnet werden kann. Hiervon zu unterscheiden ist die Funktionsstellung "kindergesichert", die lediglich an den hinteren Seitentüren gefordert wird und eine Öffnung von außen her zulässt, eine Innenöffnung jedoch unterbindet. Als Folge hiervon sind die zugehörigen Seitentürschlösser meistens unterschiedlich ausgelegt und aufgebaut. Das ist im Sinne einer vereinfachten Fertigung und Montage sowie Inbetriebnahme grundsätzlich nachteilig.

Im Stand der Technik nach der DE 102 59 972 A1 wird eine Kraftfahrzeugtürschlossanlage beschrieben. Diese verfügt über eine Kindersicherung und elektrische Innenbetätigungsmittel. Die Kindersicherung kann mit Hilfe eines Sensors abgefragt werden. Eine zusätzliche Steuereinheit aktiviert oder deaktiviert die elektrische Innenbetätigung in Abhängigkeit des Signals des genannten Sensors.

Darüber hinaus ist durch die auf die Anmelderin zurückgehende DE 195 30 720 A1 eine Zentralverriegelungsanlage bekannt geworden. Diese greift auf verschiedene Steuereinheiten zurück. An dieser Stelle kommt es insbesondere darauf an, beispielsweise familienfremde Komponenten zu erkennen.

Der Stand der Technik nach der DE 20 2011 005 608 U1 betrifft ein Kraftfahrzeugschloss, bei dem ein Betätigungshebel vorgesehen ist, der in montiertem Zustand einem Betätigungsgriff zugeordnet ist. Durch Betätigung des Betätigungshebels lässt sich eine Sperrklinke aus ihrer eingefallenen Stellung ausheben. Außerdem kann das bekannte Kraftfahrzeugschloss in unterschiedliche Funktionszustände wie "entriegelt", "verriegelt", "diebstahlgesichert" oder "kindergesichert" gebracht werden. Der aktuelle Funktionszustand ist dabei stets in einer Schlosssteuerung gespeichert. Außerdem können mit Hilfe eines Schalters einzelne Schaltzustände abgefragt werden.

Schließlich zeigt die DE 10 2004 036 670 A1 ein Kraftfahrzeugschloss mit motorischem Öffnungsantrieb. Außerdem ist eine Betätigungsmechanik bzw. Betätigungshebelkette zum mechanischen Betätigen der Schließelemente von außen und von innen über ein Außenbetätigungselement und ein Innenbetätigungselement realisiert. Die Möglichkeit einer Vereinheitlichung der einzelnen Kraftfahrzeugtürschlösser wird nicht angesprochen.

Der Erfindung liegt das technische Problem zugrunde, ein gattungsgemäßes Kraftfahrzeug mit einer Mehrzahl an Kraftfahrzeugtürschlössern sowie wenigstens einer Steuereinheit so weiterzuentwickeln, dass die Kraftfahrzeugtürschlösser möglichst einheitlich aufgebaut sind und dennoch sämtliche üblichen Funktionsstellungen abgebildet werden können.

Diese technische Problemstellung wird durch ein Kraftfahrzeug gemäß Anspruch 1 gelöst.

Erfindungsgemäß ist die Betätigungshebelkette als Innenbetätigungshebelkette ausgebildet. Demgegenüber fehlt im Allgemeinen eine Außenbetätigungshebelkette. Aus diesem Grund erfolgt die Außenbetätigung typischerweise mit Hilfe eines elektromotorischen Öffnungsantriebes. Der elektromotorische Öffnungsantrieb wird zu diesem Zweck lediglich bei einer Außenbetätigung einer zugehörigen Kraftfahrzeugtür beaufschlagt.

Die Außenbetätigung selbst erfolgt erfindungsgemäß über eine Fernbedienung und/oder schlüssellos durch einen Frage-/Antwortdialog und/oder durch eine sensorische Abfrage eines Türaußengriffes.

Demgegenüber wird die Betätigungshebelkette respektive Innenbetätigungshebelkette im Allgemeinen mit Hilfe eines Türinnengriffes beaufschlagt.

Die Betätigungshebelkette bzw. Innenbetätigungshebelkette verfügt erfindungsgemäß über eine elektromotorisch beaufschlagbare Kupplung. Auf diese Weise kann der jeweilige Status realisiert werden. Befindet sich beispielsweise die fragliche Betätigungshebelkette des betrachteten Kraftfahrzeugtürschlosses in der Position "wirksam", so führt eine Beaufschlagung mit Hilfe des Türinnengriffes im Beispielfall dazu, dass die geschlossene Betätigungshebelkette respektive Innenbetätigungshebelkette auf das Gesperre arbeiten und dieses ausheben kann. Die zugehörige Kraftfahrzeugtür lässt sich folglich von innen her öffnen. Die Kupplung ist eingelegt. Mit Hilfe eines Sensors lässt sich die Position der Kupplung und folglich der Betätigungshebelkette abfragen und an eine Steuereinheit übermitteln.

Demgegenüber korrespondiert der "unwirksame" Status dazu, dass die Kupplung ausgelegt ist. Die Betätigungshebelkette bzw. Innenbetätigungshebelkette ist mechanisch unterbrochen. Eine Beaufschlagung mit Hilfe des Türinnengriffes geht folglich in Bezug auf das Gesperre leer. Das Gesperre kann folglich nicht geöffnet werden.

Mit Hilfe des elektromotorischen Antriebes für die Kupplung können nun Funktionszustände an dem betreffenden Kraftfahrzeugtürschloss und somit der zugehörigen Kraftfahrzeugtür wie beispielsweise "innen verriegelt" oder "innen entriegelt" realisiert werden. Die Position "innen verriegelt" korrespondiert zur ausgelegten Kupplung und folglich dazu, dass die Innenbetätigungshebelkette unterbrochen ist und Beaufschlagungen des Türinnengriffes leer gehen. Demgegenüber lässt sich das Gesperre in der Position "innen entriegelt" öffnen.

Neben diesen Funktionsstellungen lassen sich aber auch weitergehende Funktionen realisieren und abbilden. So korrespondiert beispielsweise die Funktionsstellung "diebstahlgesichert" dazu, dass der elektromotorische Öffnungsantrieb für die Außenbetätigung ebenso unwirksam ist wie der Türinnengriff. Das heißt, die zugehörige Kraftfahrzeugtür kann weder durch eine Beaufschlagung des Türinnengriffes noch des Türaußengriffes geöffnet oder entriegelt werden.

Erfindungsgemäß lässt sich auf diese Weise auch eine "Kindersicherung" realisieren. Hierzu kommt es besonders darauf an, den türschlossspezifischen Status der Betätigungshebelkette auszuwerten und an die Steuereinheit zu übermitteln bzw. mit Hilfe der Steuereinheit zu realisieren. Der türschlossspezifische Status der Betätigungshebelkette enthält in diesem Zusammenhang nicht nur Informationen über den Zustand der Betätigungshebelkette im Sinne von "wirksam/unwirksam", wie sie durch den Sensor des zugehörigen Kraftfahrzeugtürschlosses geliefert werden. Sondern mit Hilfe des türschlossspezifischen Status der Betätigungshebelkette wird die Steuereinheit auch über das zugehörige Kraftfahrzeugtürschloss als solches informiert.

Das kann beispielsweise derart erfolgen, dass bei Realisierung von vier Kraftfahrzeugtürschlössern an den zugehörigen vier Seitentüren die einzelnen Sensorsignale unterschiedlich gestaltet sind, so dass über das Sensorsignal die Steuereinheit zugleich Informationen dergestalt erhält, von welchem Kraftfahrzeugtürschloss das betreffende Sensorsignal stammt. Alternativ hierzu ist es selbstverständlich aber auch möglich, dass die Steuereinheit über ein meistens ohnehin realisiertes Busssytem das fragliche Kraftfahrzeugtürschloss abfragt und über die zu dem Kraftfahrzeugtürschloss gehörige Busadresse und das abgegebene Sensorsignal letztendlich über den türschlossspezifischen Status der Betätigungshebelkette im betreffenden Kraftfahrzeugtürschloss informiert wird und diesen wunschgemäß auch realisieren kann.

Auf diese Weise gibt der türschlossspezifische Status Informationen über die räumliche/funktionelle Auslegung des betreffenden Kraftfahrzeugtürschlosses wieder. Beispielsweise drückt der türschlossspezifische Status aus, dass die Betätigungshebelkette des linken hinteren Kraftfahrzeugtürschlosses in der Kraftfahrzeugkarosserie den Status "wirksam" aufweist. Auf diese Weise kann die Steuereinheit je nach gewünschter und einzurichtender Funktionsstellung einzelne oder alle Kraftfahrzeugtürschlösser türschlossspezifisch ansteuern.

Soll beispielsweise die Funktionsstellung "kindergesichert" eingerichtet werden, so sorgt die Steuereinheit dafür, dass die jeweils unmittelbar auf das Gesperre arbeitenden elektromotorischen Antriebe der zugehörigen Kraftfahrzeugtürschlösser nach wie vor wirksam sind. Das heißt, die sämtlichen Kraftfahrzeugtüren lassen sich von außen her entriegeln und elektrisch öffnen. Zugleich führt die gewünschte Funktionsstellung "kindergesichert" dazu, dass mit Bezug zu den beiden hinteren Seitentüren und den dort vorgesehenen Kraftfahrzeugtürschlössern die Kupplung mit Hilfe des elektromotorischen Antriebes derart beaufschlagt wird, dass die zugehörige Innenbetätigungshebelkette den Status "unwirksam" einnimmt. Dadurch gehen Beaufschlagungen der Türinnengriffe an den beiden hinteren Seitentüren leer, wie man dies in der zugehörigen Stellung "Kindersicherung ein" erwartet.

Demgegenüber werden die elektromotorischen Antriebe für die jeweiligen Kupplungen der zugehörigen Betätigungshebelketten in den Kraftfahrzeugtürschlössern der beiden vorderen Seitentüren beispielsweise nicht angesteuert respektive behält die Innenbetätigungshebelkette ihren Status "wirksam" bei. Sobald also der Türinnengriff der zugehörigen jeweiligen vorderen Seitentür beaufschlagt wird, lässt sich die vordere Seitentür wunschgemäß öffnen, nicht aber die jeweilige hintere Seitentür.

Auf diese Weise wird insgesamt ein mit einer Mehrzahl an Kraftfahrzeugtürschlössern ausgerüstetes Kraftfahrzeug zur Verfügung gestellt und realisiert, bei dem die einzelnen Kraftfahrzeugtürschlösser für sämtliche Seitentüren praktisch konstruktiv gleich aufgebaut sind. Die Unterscheidung der unterschiedlichen Funktionsstellungen erfolgt über die Steuereinheit bzw. dadurch, dass der Status der Betätigungshebelkette abgefragt wird, und zwar türschlossspezifisch. Dadurch kann die Steuereinheit die einzelnen Kraftfahrzeugtürschlösser unterschiedlich ansteuern und verschiedene Zustände abbilden und realisieren. Das alles gelingt unter Berücksichtigung eines frappierend einfachen und funktionssicheren Aufbaus. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: das erfindungsgemäße Kraftfahrzeug schematisch und
- Fig. 2: ein zugehöriges Kraftfahrzeugtürschloss in einer Übersicht.

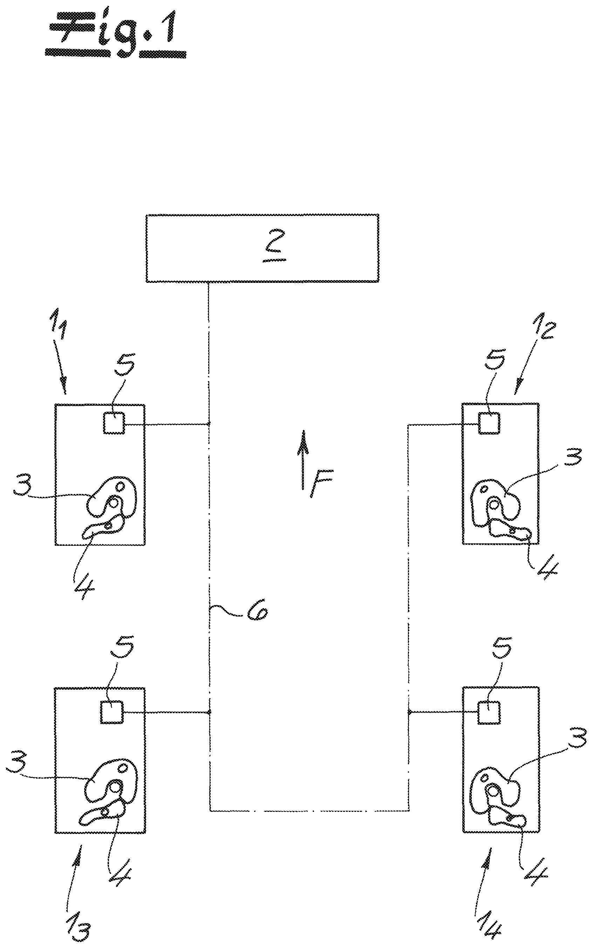

In der Fig. 1 ist ein Kraftfahrzeug dargestellt, welches mit einer Mehrzahl an Kraftfahrzeugtürschlössern 1 sowie wenigstens einer Steuereinheit 2 ausgerüstet ist. Die einzelnen Kraftfahrzeugtürschlösser 1 sind nicht explizit dargestellten vorderen und hinteren Seitentüren zugeordnet. In der Schemazeichnung der Fig. 1 erkennt man im jeweiligen Kraftfahrzeugtürschloss 1 lediglich angedeutet ein Gesperre 3, 4 aus einer Drehfalle 3 und einer Sperrklinke 4. Zusätzlich ist noch ein Sensor 5 wiedergegeben, dessen genaue Funktion nachfolgend noch näher erläutert wird. Tatsächlich gibt der jeweils an die Steuereinheit 2 angeschlossene Sensor 5 den Zustand des betreffenden Kraftfahrzeugtürschlosses bzw. einer nachfolgend noch zu erörternden Betätigungshebelkette 12, 13, 14 im Sinne von wirksam/unwirksam wieder.

Um die einzelnen Kraftfahrzeugtürschlösser 1 zu unterscheiden, sind diese jeweils mit tiefgestellten Ziffern ausgerüstet. So wird das Kraftfahrzeugtürschloss 1 in oder an der in Fahrtrichtung F linken vorderen Seitentür mit 1₁ bezeichnet. Bei dem Kraftfahrzeugtürschloss 1₂ handelt es sich um das zur rechten vorderen Seitentür gehörige Kraftfahrzeugtürschloss 1. Die Kraftfahrzeugtürschlösser 1₃ und 1₄ gehören demzufolge zur linken hinteren und rechten hinteren Seitentür. Die sämtlichen Kraftfahrzeugtürschlösser 1₁ bis 1₄ kommunizieren im Beispielfall über einen Bus oder allgemein eine bzw. mehrere Verbindungsleitung(en) 6 mit der übergeordneten Steuereinheit 2. Die Steuereinheit 2 kann im Innern eine Kraftfahrzeugkarossiere angeordnet sein. Außerdem sind über die Verbindungsleitung 6 respektive den Bus die einzelnen Sensoren 5 mit der Steuereinheit 2 verbunden, so dass die Sensorsignale von der Steuereinheit 2 erfasst und ausgewertet werden können.

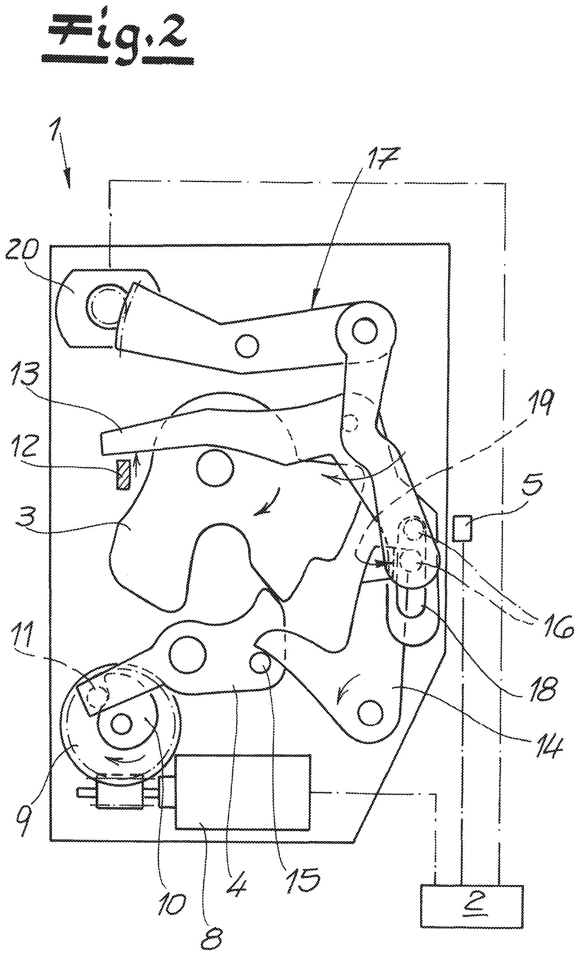

In der Fig. 2 ist nun der Detailaufbau der jeweiligen Kraftfahrzeugtürschlösser 1 dargestellt. Man erkennt, dass die betreffenden Kraftfahrzeugtürschlösser 1₁ bis 1₄ grundsätzlich jeweils gleich aufgebaut sind. Neben dem bereits angesprochenen Gesperre 3, 4 aus Drehfalle 3 und Sperrklinke 4 erkennt man zunächst einmal einen elektromotorischen Antrieb 8, 9, 10, 11.

Der elektromotorische Antrieb 8 bis 11 ist vorliegend als elektromotorischer Öffnungsantrieb 8 bis 11 ausgerüstet und wird lediglich bei einer Außenbetätigung einer zugehörigen und nicht ausdrücklich dargestellten Kraftfahrzeugtür beaufschlagt. Dazu mag ein ebenfalls nicht ausdrücklich gezeichneter Türaußengriff betätigt werden, welcher seinerseits einen Sensor auslöst. Dessen Sensorsignale werden von der Steuereinheit 2 ausgewertet und als zu einer gewünschten Außenbetätigung gehörend interpretiert. Als Folge hiervon beaufschlagt die Steuereinheit 2 einen Elektromotor 8 als Bestandteil des elektromotorischen Öffnungsantriebes 8 bis 11.

Der Elektromotor 8 treibt über eine auf seiner Ausgangswelle befindliche Schnecke ein Schneckenrad 9 an, welches über eine Kontur 10 bzw. einen Betätigungsnocken 10 an einem Zapfen 11 der Sperrklinke 4 angreift und die Sperrklinke 4 bei einem solchen elektrischen Öffnungsvorgang im in der Fig. 2 angedeuteten Uhrzeigersinn beaufschlagt. Dadurch kommt die Drehfalle 3 frei und kann federunterstützt einen nicht dargestellten Schließbolzen ebenfalls freigeben. Denn die Drehfalle 3 öffnet sich federunterstützt im angedeuteten Uhrzeigersinn. Die zugehörige Kraftfahrzeugtür lässt sich auf diese Weise von außen her öffnen.

Neben diesem elektromotorischen Öffnungsantrieb 8 bis 11 für die Außenbetätigung bzw. einen elektrischen Öffnungsvorgang von außen her ist zusätzlich noch eine mechanisch auf das Gesperre 3, 4 arbeitende Betätigungshebelkette 12, 13, 14 realisiert. Die Betätigungshebelkette 12, 13, 14 ist im Ausführungsbeispiel als Innenbetätigungshebelkette 12, 13, 14 ausgebildet. Tatsächlich weist die Betätigungshebelkette bzw. Innenbetätigungshebelkette 12, 13, 14 einen Türinnengriff 12 auf. Der Türinnengriff 12 arbeitet bei einer in der Fig. 2 angedeuteten ziehenden Beaufschlagung auf einen Innenbetätigungshebel 13. Sofern der Innenbetätigungshebel 13 über eine Kupplung 16 mechanisch mit einem Auslösehebel 14 gekoppelt ist, sorgen entsprechende und in der Fig. 2 angedeutete Uhrzeigersinnbewegungen des L-förmigen Innenbetätigungshebels 13 dafür, dass der Auslösehebel 14 mit Hilfe der zwischengeschalteten Kupplung 16 im angedeuteten Gegenuhrzeigersinn verschwenkt wird und einen weiteren Zapfen 15 an der Sperrklinke 4 beaufschlagt. Als Folge hiervon wird die Sperrklinke 4 erneut von ihrem Eingriff mit der Drehfalle 3 abgehoben und das dargestellte Kraftfahrzeugtürschloss ebenso wie eine zugehörige Kraftfahrzeugtür geöffnet. Hierzu korrespondiert im Gegensatz zu der Außenbetätigung mit Hilfe des elektromotorischen Öffnungsantriebes 8 bis 11 eine Innenbetätigung.

Bei der Kupplung 16 handelt es sich im Ausführungsbeispiel um einen Kupplungszapfen 16, welcher mit Hilfe eines geteilten Kupplungshebels bzw. Stellhebels 17 hinsichtlich seiner Position im Innern einer Ausnehmung 18 des Innenbetätigungshebels 13 verändert werden kann. Befindet sich der Kupplungszapfen 16 in der in Fig. 2 dargestellten gestrichelten Position, so ist die Betätigungshebelkette 12, 13, 14 insgesamt geschlossen und führt eine Beaufschlagung des Türinnengriffes 12 wie beschrieben dazu, dass das Gesperre 3, 4 geöffnet wird. Das Kraftfahrzeugtürschloss 1 ist entriegelt.

Nimmt dagegen die Kupplung bzw. der Kupplungszapfen 16 die ebenfalls in der Fig. 2 angedeutete strichpunktierte Position ein, so kann der Innenbetätigungshebel 13 den Auslösehebel 14 nicht beaufschlagen, weil dann die Kupplung bzw. der Kupplungsstift 16 an einer zugehörigen Kante 19 des Auslösehebels 14 vorbeifährt und der Auslösehebel 14 in Ruhe bleibt. Das Gesperre 3, 4 lässt sich in diesem Fall nicht öffnen. Das Kraftfahrzeugtürschloss 1 ist verriegelt.

Um die wenigstens zwei in der Fig. 2 angedeuteten Positionen, nämlich "Kupplung eingelegt" (gestrichelt) und "Kupplung ausgelegt" (strichpunktiert) der Kupplung bzw. des Kupplungszapfens 16 realisieren und umsetzen zu können, ist ein elektromotorischer Antrieb 20 realisiert, mit dessen Hilfe der den Kupplungszapfen 16 tragende Stellhebel bzw. Kupplungshebel 17 so beaufschlagt wird, dass der Kupplungszapfen 16 endseitig des Stellhebels 17 die gewünschte Position einnimmt. Dem Kupplungszapfen 16 ist dabei der zuvor bereits angesprochene Sensor 5 zugeordnet. Mit Hilfe des Sensors 5 kann folglich der Status der Betätigungshebelkette 12, 13, 14 abgefragt werden. Wird die Position "Kupplung eingelegt" eingenommen, so befindet sich die Betätigungshebelkette 12, 13, 14 im Status "wirksam". Demgegenüber korrespondiert der Zustand "Kupplung ausgelegt" dazu, dass die Betätigungshebelkette 12, 13, 14 ihren Status "unwirksam" einnimmt.

Wie bereits erläutert, wird der elektromotorische Öffnungsantrieb 8 bis 11 lediglich bei einer Außenbetätigung der zugehörigen Kraftfahrzeugtür beaufschlagt. Die Außenbetätigung kann über die sensorische Abfrage des nicht dargestellten Türaußengriffes erfolgen. Alternativ oder zusätzlich lässt sich die Außenbetätigung aber auch über eine Fernbedienung und/oder schlüssellos durch einen Frage-/Antwortdialog unter Rückgriff auf beispielsweise eine vom Benutzer mitgeführte Chipkarte vornehmen, wie dies allgemein bekannt ist. Demgegenüber wird die Betätigungshebelkette bzw. Innenbetätigungshebelkette 12, 13, 14 ausschließlich mit Hilfe des Türinnengriffes 12 beaufschlagt.

Das Signal des Sensors 5 des zugehörigen Kraftfahrzeugtürschlosses 1 bzw. der Status der korrespondierenden Betätigungshebelkette 12, 13, 14 des zugehörigen Kraftfahrzeugtürschlosses 1 wird türschlossspezifisch an die Steuereinheit 2 übermittelt. Hierunter ist erfindungsgemäß zu verstehen, dass nicht nur das Signal des Sensors 5 über den Bus bzw. die Verbindungsleitungen 6 übertragen wird. Sondern das betreffende Kraftfahrzeugtürschloss 1 übermittelt auch Informationen über das zugehörige Kraftfahrzeugtürschloss 1 an die Steuereinheit 2. Hierzu korrespondiert der türschlossspezifische Status, welcher das Kraftfahrzeugtürschloss 1 identifiziert ebenso wie den Status seiner Betätigungshebelkette 12, 13, 14. Als Folge hiervon werden an die Steuereinheit 2 beispielsweise Informationen dergestalt übermittelt, dass die Betätigungshebelkette 12, 13, 14 beispielsweise im rechten vorderen Kraftfahrzeugtürschloss 1₂ den Status "unwirksam" aufweist. Vergleichbare Informationen stehen von sämtlichen Kraftfahrzeugtürschlössern 1₁ bis 1₄ zur Verfügung.

Auf diese Weise kann die Steuereinheit 2 je nach der letztendlich gewünschten Funktionsstellung einzelne oder alle Kraftfahrzeugtürschlösser 1₁ bis 1₄ türschlossspezifisch ansteuern. Wird beispielsweise die Funktionsstellung "diebstahlgesichert" gewünscht, so korrespondiert dies dazu, dass zunächst einmal sämtliche elektromotorischen Öffnungsantriebe 8 bis 11 der vier relevanten Kraftfahrzeugtürschlösser 1₁ bis 1₄ unwirksam geschaltet werden. Das heißt, die jeweiligen Elektromotoren 8 können seitens der Steuereinheit 2 nicht beaufschlagt werden. Dadurch ist eine Außenbetätigung nicht möglich.

Darüber hinaus steuert die Steuereinheit 2 in diesem Fall den elektromotorischen Antrieb 20 zur Ansteuerung der elektromotorisch beaufschlagbaren Kupplung 16 wiederum sämtlicher Kraftfahrzeugtürschlösser 1₁ bis 1₄ derart an, dass diese jeweils die zugehörige Betätigungshebelkette 12, 13, 14 in den Zustand "unwirksam" überführen. In diesem Zustand "unwirksam" gehen auch etwaige Betätigungen des Türinnengriffes 12 leer, so dass die betreffende Kraftfahrzeugtür weder von außen noch von innen her geöffnet oder entriegelt werden kann. Das ist die übliche Funktionalität in der Stellung "diebstahlgesichert".

Soll dagegen die Funktionsstellung "kindergesichert" umgesetzt werden, so werden die jeweiligen elektromotorischen Öffnungsantriebe 8 bis 11 der sämtlichen Kraftfahrzeugtürschlösser 1₁ bis 1₄ mit Hilfe der Steuereinheit 2 nach wie vor in wirksamer Position gehalten, weil in der Funktionsstellung "kindergesichert" im Regelfall eine Außenentriegelung und Außenöffnung der betreffenden Kraftfahrzeugtür ausdrücklich möglich sein soll und gewünscht wird. In gleicher Weise werden auch die Betätigungshebelketten 12, 13, 14 der beiden den vorderen Seitentüren zugeordneten Kraftfahrzeugtürschlösser 1₁ und 1₂ in die Position "wirksam" überführt, sofern sie diese Funktionsstellung nicht ohnehin einnehmen. Dadurch lassen sich die beiden vorderen Seitentüren in der Funktionsstellung "kindergesichert" auch von innen her öffnen.

Demgegenüber sorgt die Steuereinheit 2 mit Bezug zu den den beiden hinteren Seitentüren zugeordneten Kraftfahrzeugtürschlossen 1₃ und 1₄ dafür, dass der elektromotorische Antrieb 20 die hiervon beaufschlagte Kupplung 16 in die in der Fig. 2 strichpunktiert dargestellte Position "Kupplung nicht eingelegt" überführt. Dadurch ist die betreffende Betätigungshebelkette bzw. Innenbetätigungshebelkette 12, 13, 14 in den Zustand "unwirksam" überführt worden. Etwaige Beaufschlagungen des Türinnengriffes 12 gehen folglich leer. Das gilt jedoch wunschgemäß nur für die beiden hinteren Seitentüren, so dass hierdurch insgesamt die Funktionsstellung "kindergesichert" abgebildet wird.

## Patentansprüche

1. Kraftfahrzeug, mit einer Mehrzahl an Kraftfahrzeugtürschlössern (1) sowie wenigstens einer Steuereinheit (2), wobei das jeweilige Kraftfahrzeugtürschloss (1) zumindest eine auf ein Gesperre (3, 4) mechanisch arbeitende Betätigungshebelkette (12, 13, 14) aufweist, deren jeweiliger Status (wirksam/ unwirksam) mit Hilfe eines Sensors (5) erfasst und an die Steuereinheit (2) übermittelt wird, und wobei die Steuereinheit (2) je nach dem türschlossspezifischen Status der Betätigungshebelkette (12, 13, 14) zwischen einzelnen Funktionsstellungen unterscheidet,
wobei die Betätigungshebelkette (12, 13, 14) als Innenbetätigungshebelkette (12, 13, 14) ausgebildet ist, wobei die Betätigungshebelkette (12, 13, 14) mit einer elektromotorisch beaufschlagbaren Kupplung (16) ausgerüstet ist, um den jeweiligen Status (wirksam/unwirksam) realisieren zu können, wobei die Außenbetätigung des Kraftfahrzeugtürschlosses (1) über eine Fernbedienung und/oder schlüssellos durch einen Frage-/Antwortdialog und/oder durch eine sensorische Abfrage des Türaußengriffes erfolgt, wobei der türschlossspezifische Status der Betätigungshebelkette (12, 13, 14) nicht nur Informationen über den Zustand der Betätigungshebelkette (12, 13, 14) (wirksam/unwirksam), sondern auch über das zugehörige Kraftfahrzeugtürschloss (1₁ bis 1₄) enthält, nämlich die räumliche/funktionelle Auslegung des betreffenden Kraftfahrzeugtürschlosses (1₁ bis 1₄) wiedergibt, wobei die Steuereinheit (2) je nach gewünschter Funktionsstellung "kindergesichert" oder "diebstahlgesichert" einzelne oder alle Kraftfahrzeugtürschlösser (1₁ bis 1₄) türschlossspezifisch ansteuert.

2. Kraftfahrzeug nach Anspruch 1, **dadurch gekennzeichnet, dass** ein auf das Gesperre (3, 4) unmittelbar arbeitender elektromotorischer Antrieb (8 bis 11) vorgesehen ist.

3. Kraftfahrzeug nach Anspruch 2, **dadurch gekennzeichnet, dass** der elektromotorische Antrieb (8 bis 11) als elektromotorischer Öffnungsantrieb (8 bis 11) lediglich bei einer Außenbetätigung einer zugehörigen Kraftfahrzeugtür beaufschlagt wird.

4. Kraftfahrzeug nach einem der Ansprüche 1 bis 3, **dadurch gekennzeichnet, dass** die Betätigungshebelkette (12, 13, 14) mit Hilfe eines Türinnengriffes (12) beaufschlagt wird.

5. Kraftfahrzeug nach einem der Ansprüche 1 bis 4, **dadurch gekennzeichnet, dass** der türschlossspezifische Status Informationen über die räumliche/funktionelle Auslegung des betreffenden Kraftfahrzeugtürschlosses (1₁ bis 1₄) wiedergibt, nämlich linkes hinteres Kraftfahrzeugtürschloss (1₃).

## Claims

1. Motor vehicle comprising a plurality of motor vehicle door latches (1) and at least one control unit (2), wherein each motor vehicle door latch (1) has at least one operating lever chain (12, 13, 14) that acts mechanically on a locking mechanism (3, 4), the relevant status (active/inactive) of which chain is detected by means of a sensor (5) and transmitted to the control unit (2), and wherein the control unit (2) distinguishes between individual functional positions depending on the door-latch-specific status of the operating lever chain (12, 13, 14), wherein the operating lever chain (12, 13, 14) is designed as an internal operating lever chain (12, 13, 14), wherein the operating lever chain (12, 13, 14) is equipped with a coupling (16) that can be acted upon electromotively so as to be able to achieve the relevant status (active/inactive), wherein operation of the motor vehicle door latch (1) from the outside is achieved by means of remote control and/or keylessly by means of a question/answer dialog and/or by means of a sensory query of the outside door handle, wherein the door-latch-specific status of the operating lever chain (12, 13, 14) contains information not only about the state of the operating lever chain (12, 13, 14) (active/inactive), but also about the associated motor vehicle door latch (1₁ to 1₄), namely said status represents the spatial/functional design of the relevant motor vehicle door latch (1₁ to 1₄), wherein the control unit (2) actuates individual or all of the motor vehicle door latches (1₁ to 1₄) in a door-latch-specific manner depending on the desired functional position of "child-proof" or "theft-proof".

2. Motor vehicle according to claim 1, **characterized in that** an electromotive drive (8 to 11) which acts directly on the locking mechanism (3, 4) is provided.

3. Motor vehicle according to claim 2, **characterized in that** the electromotive drive (8 to 11) is acted upon, as an electromotive opening drive (8 to 11), only when an associated motor vehicle door is operated from the outside.

4. Motor vehicle according to any of claims 1 to 3, **characterized in that** the operating lever chain (12, 13, 14) is acted upon by means of an inside door handle (12).

5. Motor vehicle according to any of claims 1 to 4, **characterized in that** the door-latch-specific status represents information about the spatial/functional design of the relevant motor vehicle door latch (11 to 1₄), namely the left-hand rear motor vehicle door latch (1₃).

## Revendications

1. Véhicule automobile, comportant une pluralité de serrures de portes de véhicule automobile (1) et au moins une unité de commande (2), la serrure de porte de véhicule automobile (1) respective présentant au moins une chaîne de leviers d'actionnement (12, 13, 14) qui agit mécaniquement sur un mécanisme de verrouillage (3, 4), dont l'état respectif (actif/inactif) est détecté à l'aide d'un capteur (5) et est transmis à l'unité de commande (2), et l'unité de commande (2) différenciant plusieurs positions fonctionnelles en fonction de l'état spécifique à la serrure de porte de la chaîne de leviers d'actionnement (12, 13, 14),
la chaîne de leviers d'actionnement (12, 13, 14) étant conçue en tant que chaîne de leviers d'actionnement (12, 13, 14) interne, la chaîne de leviers d'actionnement (12, 13, 14) étant équipée d'un accouplement (16) actionnable par un moteur électrique afin de pouvoir réaliser l'état respectif (actif/inactif), l'actionnement externe de la serrure de porte de véhicule automobile (1) s'effectuant par l'intermédiaire d'une télécommande et/ou sans clé par un dialogue question/réponse et/ou par une interrogation sensorielle de la poignée de porte externe, l'état spécifique à la serrure de porte de la chaîne de leviers d'actionnement (12, 13, 14) contenant non seulement des informations concernant l'état de la chaîne de leviers d'actionnement (12, 13, 14) (actif/ inactif), mais concernant également la serrure de porte de véhicule automobile (1₁ à 1₄) associée, à savoir la conception spatiale/fonctionnelle de la serrure de porte de véhicule automobile (1₁ à 1₄) concernée, l'unité de commande (2) commandant plusieurs ou toutes les serrures de portes de véhicule automobile (1₁ à 1₄) de manière spécifique à la porte en fonction des positions fonctionnelles souhaitées telles que « sécurité enfant » ou « antivol ».

2. Véhicule automobile selon la revendication 1, **caractérisé en ce qu'**un entraînement électromoteur (8 à 11) agissant directement sur le mécanisme de verrouillage (3, 4) est prévu.

3. Véhicule automobile selon la revendication 2, **caractérisé en ce que** l'entraînement électromoteur (8 à 11) n'agit en tant qu'entraînement électromoteur d'ouverture (8 à 11) que lorsqu'un actionnement externe d'une porte de véhicule automobile associée est sollicité.

4. Véhicule automobile selon l'une des revendications 1 à 3, **caractérisé en ce que** la chaîne de leviers d'actionnement (12, 13, 14) est sollicitée à l'aide d'une poignée de porte interne (12).

5. Véhicule automobile selon l'une des revendications 1 à 4, **caractérisé en ce que** l'état spécifique à la serrure de porte reproduit des informations concernant la conception spatiale/fonctionnelle de la serrure de porte de véhicule automobile (1₁ à 1₄) concernée, à savoir la serrure de porte de véhicule automobile arrière gauche (1₃).
